# EUROPÄISCHE PATENTSCHRIFT

(11) **EP 3 656 246 B1**
(45) Veröffentlichungstag und Bekanntmachung des Hinweises auf die Patenterteilung: **01.09.2021**
(21) Anmeldenummer: 19210397.6
(22) Anmeldetag: 20.11.2019
(51) Int. Cl.: A45C 11/20, A47J 47/12, A45F 3/46, A47J 47/00, A45C 13/02, A45F 5/00

(54) **BROTZEITDOSE MIT GURTBAND**
LUNCHBOX WITH BELT STRAP
BOÎTE À REPAS POURVUE DE SANGLE

(30) Priorität: 20.11.2018 DE 202018106587 U
(43) Veröffentlichungstag der Anmeldung: 27.05.2020
(73) Patentinhaber: Säckl, Martin, 87459 Pfronten (DE); Vogler, Raphael, 88239 Wangen im Allgäu (DE)
(72) Erfinder: Säckl, Martin, 87459 Pfronten (DE); Vogler, Raphael, 88239 Wangen im Allgäu (DE)
(74) Vertreter: VKK Patentanwälte PartG mbB

(56) Entgegenhaltungen:
- DE-A1- 19 803 079
- DE-A1-102011 106 639
- DE-U1-202014 006 624
- Anonymous: "Alpin Loacker Edelstahl Lunchbox Groß 1800ml Schneidbrett - Brotdose, Bento Box, Vesperdosen | mit Fächern, Trennwand | Die große Meal prep Brotbox Wandern, Reisen, Klettern.: Amazon.de: Sport & Freizeit", , 7. August 2017 (2017-08-07), XP055673537, Gefunden im Internet: URL:https://www.amazon.de/Alpin-Loacker-Ed elstahl-Lunchbox-Schneidbrett/dp/B074H9MBV Q/ref=redir_mobile_desktop?ie=UTF8&aaxitk= nfCLhccptDsJpTFpnjfK9g&hsa_cr_id=696220031 0702&ref_=sb_s_sparkle&th=1 [gefunden am 2020-03-04]
- Anonymous: "Umami ? Lunch Box Écologique 1100ml - en Fibre De Bambou - Boîte Bento Japonaise - Passe Au Lave-Vaisselle - Durable, Sain & Design - Zéro Déchet - sans BPA - Garantie 5 Ans - Marque Française: Amazon.fr: Cuisine & Maison", , 5. Dezember 2018 (2018-12-05), XP055673520, Gefunden im Internet: URL:https://www.amazon.fr/dp/B07L59R523/re f=sspa_dk_detail_5?psc=1&pd_rd_i=B07L59R52 3&pd_rd_w=PHrBG&pf_rd_p=42b0c882-2f60-488f -b868-d46b19aecf92&pd_rd_wg=QNgDH&pf_rd_r= 4SMGTH2TKD0WAWDZNA0Y&pd_rd_r=50107557-313f -41c1-9a35-733690858cb2&spLa=ZW5jcnlwdGVkU XVhbGlmaWVyPUFKMk02QVFSNlNDR00mZW5jcnlwdGV kSWQ9QTA5M [gefunden am 2020-03-04]

## Beschreibung

Die Erfindung betrifft eine Brotzeitdose mit Gurtband. Brotzeitdosen dienen in erster Linie dem Transport von Lebensmitteln und werden tagtäglich angewendet, beispielsweise auf der Arbeit oder in der Schule, aber auch bei Freizeitaktivitäten wie Tagesausflügen oder anderen Outdooraktivitäten. Im Zuge des aktuell steigenden Ernährungsbewusstseins wird eine möglichst hohe Qualität des Essens immer wichtiger, welches möglichst frisch zubereitet und verzehrt werden soll. Die mitgenommene Mahlzeit soll daher beim Transport möglichst keinen Qualitätsverlust erleiden. Dies fängt bereits bei dem Trennen von flüssigkeitsabgebenden Lebensmitteln wie Tomaten und flüssigkeitsaufnehmenden Lebensmitteln wie Brot an, sodass die Lebensmittel erst kurz vor dem Verzehr zusammengelegt und zubereitet werden sollen. Auch ein Anschneiden von Tomaten oder anderen, stark flüssigkeitshaltigen Lebensmitteln, wird dabei vorzugsweise auf einen Moment kurz vor dem Verzehr verschoben, sodass während des Transports kein Flüssigkeitsverlust eintritt. Dieser späten Zubereitung bedarf neben einer mitgeführten Brotzeitdose eines Schneidmessers und vorzugsweise einer hygienisch einwandfreien Unterlage, welche, wenn möglich, nicht die Brotzeitdose selbst sein sollte, da diese unter einer Verwendung als Schneidbrett leidet.

Insbesondere im Freien sind nicht immer Tische vorhanden, auf denen die Lebensmittel zubereitet werden können, sodass eine Bedienung von Schneidmesser und Schneidbrett je nach Umgebung deutlich erschwert ist. Auch ungünstige Witterungsbedingungen wie starker Wind oder ähnliches können die Benutzung der Schneidutensilien beeinträchtigen. So müssen herkömmliche Schneidbretter gemeinsam mit dem zu schneidenden Lebensmittel durch den Benutzer mit einer Hand gehalten werden, während er das Schneidbrett balanciert und das Schneidmesser mit der anderen Hand bedient.

Aus der DE 93 02 017 U1 ist eine Haushaltsbox mit Deckel bekannt, welcher über einen wannenförmigen Behälter schiebbar ist, wobei der Deckel als Schneidebrett verwendbar ist.

Die Aufgabe der vorliegenden Erfindung ist es daher, eine gegenüber dem Stand der Technik weiterentwickelte Brotzeitdose mit Schneidebrett vorzuschlagen, welche auch unter rauen Witterungs- und Umgebungsbedingungen insbesondere bediensicher und einfach verwendbar ist.

Diese Aufgabe wird durch eine Brotzeitdose gelöst, aufweisend einen Behälter, einen korrespondierenden Deckel und ein Brett, welches lösbar in dem Deckel aufgenommen ist, wobei der Deckel mindestens ein Gurtband aufweist, wobei der Deckel durch das mindestens eine Gurtband auf den Behälter spannbar ist, wobei das mindestens eine Gurtband zumindest an einem Ende lösbar mit dem Deckel verbunden ist.

Der Deckel ist so geformt, dass dieser passend auf den Behälter aufgesteckt oder aufgeschoben werden kann und eine zumindest lose aber passgenaue Verbindung zwischen Behälter und Deckel herstellbar ist. Das Brett, welches insbesondere als Schneidbrett nutzbar ist, ist dabei aus dem Deckel herausnehmbar, um eine separate Reinigung zu ermöglichen. Weiter ist das Brett im geschlossenen Zustand der Brotzeitdose nicht von außen zugänglich, es ist also an der Deckelinnenseite angeordnet. Dabei ist der Deckel vorzugsweise so ausgestaltet, dass der Deckelrand über das Schneidbrett hinausragt, sodass er eine Begrenzung des Schneidbretts ist und die Lebensmittel auf dem Schneidbrett innerhalb des Deckels gehalten werden. Dabei soll der Deckelrand erfindungsgemäß keine Höhe erreichen, die ein Schneiden der Lebensmittel auf dem Schneidbrett erschweren könnte. Eine Verbindung von Brett und Deckel ist dabei vorzugsweise eine formschlüssige, die ein einfaches Einstecken des Bretts in den Deckel ermöglicht und ein Herausfallen des Bretts, beispielsweise bei Umdrehen des Deckels, verhindert oder zumindest deutlich erschwert. Dieser Formschluss kann beispielsweise durch mindestens eine Sicke in dem Deckelrand passend oberhalb einer Brettdicke hergestellt werden. Alternativ kann das Brett an seiner im Benutzungsfall zum Deckel weisenden Seite mit mindestens einem Magneten versehen sein, durch den es an einem korrespondierenden Gegenmagneten oder am Material des Deckels selber gehalten ist. Der Deckel weist weiter ein Gurtband auf, durch das der Deckel auf den Behälter spannbar ist. Dieses Gurtband ist erfindungsgemäß in erster Linie ein breiteres, flaches Gebilde zum gefahr-und schmerzlosen Spannen um ein menschliches Körperteil wie einen Oberschenkel. Hierbei handelt es sich erfindungsgemäß um ein Gewebe oder um ein homogenes flächiges Gebilde aus einem geeigneten, auch elastischen, Kunststoff. Das Gurtband ermöglicht eine Fixierung des Deckels insbesondere an einem Oberschenkel eines Benutzers, sodass eine Verwendung des Schneidbretts auch ohne Tisch und ohne manuelles Festhalten des Schneidbretts möglich ist. Dabei ist das Gurtband vorzugsweise mit dem Deckel verbunden, sodass beim Transport kein weiteres Einzelteil mitgeführt werden muss, aber dennoch zumindest an einem Ende von dem Deckel lösbar, sodass das Gurtband zur Reinigung von Deckel und Gurtband einfach von diesem gelöst werden kann. Erfindungsgemäß ist auch, dass es an beiden Enden vom Deckel lösbar ist. Das Gurtband ist in seiner wirksamen Länge variabel veränderbar, insbesondere stufenlos veränderbar. Dies kann beispielsweise durch die Verwendung eines Gummibandes als Gurtband, oder aber durch Schlaufen oder ähnliches erfolgen, durch die eine variable Längeneinstellung ermöglicht ist.

Erfindungsgemäß weist das Gurtband ein Verdrehgelenk auf. Dieses wirkt einem Verdrehen des Gurtbandes in sich entgegen, sodass stets eine glatte, angenehme Auflage des Gurtbandes auf einem Oberschenkel eines Benutzers oder auf dem Behälter der Brotzeitdose gegeben ist. Insgesamt ist es dabei erfindungsgemäß, dass das Gurtband mit dem Verdrehgelenk keine Plastikkomponenten aufweist.

In Weiterbildung der Erfindung ist vorgesehen, dass das Verdrehgelenk im Bereich der Mitte in Längsrichtung oder an mindestens einem Ende des Gurtbandes angeordnet ist. Ist das Verdrehgelenk im Bereich der Mitte in Längsrichtung des Gurtbandes angeordnet, also das Gurtband durch das Verdrehgelenk unterbrochen, so ist vorteilhaft eine Verdrehung des Gurtbandes einfacher zu erkennen, zu beseitigen oder herbeizuführen. Im Vergleich dazu ist eine Anordnung des Verdrehgelenks an einem Ende des Gurtbandes von Vorteil, da eine Verdrehung oder aber das Verdrehgelenk selbst weniger Einschränkungen an der Auflagefläche des Gurtbandes, also je nach Anwendung auch am Bein des Benutzers, verursachen.

Ebenfalls ist in Weiterbildung der Erfindung vorgesehen, dass das Verdrehgelenk als mindestens eine, vorzugsweise zwei oder mehr Schnüre, insbesondere im Bereich der Mitte in Längsrichtung des Gurtbandes, oder als metallisches Drehgelenk, insbesondere an mindestens einem Ende des Gurtbandes, ausgebildet ist. Die Schnüre, welche das Gurtband in zwei, vorzugsweise gleichlange, Teile trennen, mit beiden Teilen aber jeweils an deren einem Ende vernäht oder anderweitig fest verbunden sind, sind dabei aus einem möglichst weichen jedoch zugfesten Material, sodass ein Übereinanderlegen der Schnüre kein punktuelles Drücken auf dem Oberschenkel des Benutzers verursacht. Ein Verdrehen des Gurtbandes führt dabei zu einem Übereinanderliegen der Schnüre, sodass diese über Kreuz liegen. Dies verhindert ein Verdrehen des Gurtbandes in sich und stellt nur eine sehr geringe Belastung für den Oberschenkel des Benutzers dar. Auch ist es vorteilhaft, dass das Gurtband durch diese Schnüre weiterhin in einem Stück vorliegt und daher nicht mehrere Teile zusammengeführt werden müssen. Alternativ dazu kann das Verdrehgelenk ein insbesondere metallisches Drehgelenk sein, welches vorteilhaft an einem Gurtende angebracht ist, insbesondere nahe des Deckels oder am Deckel selber, um so keinen Druckpunkt auf dem Benutzer-Oberschenkel zu bilden, beispielsweise nach Art eines Drehgelenks eines Karabinerhakens.

Weiter wird in Ausgestaltung der Erfindung vorgeschlagen, dass das Gurtband an mindestens einem Ende durch einen G-Haken mit dem Deckel verbunden ist. Durch diesen ist das Gurtband besonders vorteilhaft in seiner wirksamen Länge variabel verstellbar, sodass eine ausreichend sichere Befestigung auch an ganz unterschiedlichen Beinen unterschiedlicher Benutzer gewährleistet ist. An diesem G-Haken kann erfindungsgemäß auch das Drehgelenk angeordnet sein.

In Weiterbildung der Erfindung wird vorgeschlagen, dass Behälter und Deckel formschlüssig oder kraftschlüssig miteinander verbindbar sind. Die Verbindung wird insbesondere durch mindestens eine Nut, beispielsweise eine umlaufende Nut, in Deckel oder Behälter und mindestens eine, zu der mindestens einen Nut korrespondierende, Leiste in dem jeweils anderen Teil hergestellt. Alternativ können auch Schnallen oder Clip-Verbindungen vorgesehen sein. Zuletzt ist auch ein einfaches Aufstecken oder Aufsetzen des Deckels auf dem Behälter erfindungsgemäß, wobei die sitzfeste Verbindung in diesem Fall durch das Gurtband, welches im geschlossenen Zustand der Brotzeitdose um den Behälter gelegt und an diesen festgezogen wird, erreicht ist. Das Gurtband dient erfindungsgemäß daher sowohl zur spannenden Befestigung von Deckel und Behälter als auch zur spannenden Befestigung des dann umgedrehten Deckels an einem Benutzerbein oder einer anderen geeigneten Befestigungsmöglichkeit, wie beispielsweise einem horizontalen Balken, Ast, Baum etc..

In Weiterbildung der Erfindung wird mit Vorteil vorgeschlagen, dass der Behälter mindestens eine Trennwand aufweist, insbesondere eine lösbare Trennwand, wobei deren Höhe bevorzugt so gewählt ist, dass das Brett im geschlossenen Zustand der Brotzeitdose auf der Trennwand aufliegend ist. Die mindestens eine Trennwand ermöglicht es dem Benutzer, die Brotzeitdose je nach mitgeführten Lebensmitteln beliebig zu modifizieren. Ein Herausnehmen der mindestens einen Trennwand ist dabei insbesondere für die Reinigung oder aber die erneute Umgestaltung der so erzeugten Teilräume im Behälter entsprechend dem aktuellen Größenbedarf vorteilhaft. Die angepasste Höhe der Trennwand ermöglicht ein sicheres und passgenaues Verschließen der Brotzeitdose. Die Trennwand kann dabei einen zu dem Innenradius des Behälters unterschiedlichen Radius an der Außenkante aufweisen, sodass ein Kraftschluss lediglich an einem oberen Kontaktbereich der Trennwand mit der Innenseite des Behälters hergestellt ist. Dies hat den Vorteil, dass die Trennwand bei sicherem Halt mit weniger Kraftaufwand innerhalb des Behälters verschiebbar oder versetzbar ist.

In Weiterbildung der Erfindung wird vorteilhaft vorgeschlagen, dass das Brett mindestens eines der folgenden Elemente aufweist: eine umlaufende Nut mindestens an dessen Oberseite, mindestens eine zweite Nut, mindestens einen Magneten, eine Durchgriffsöffnung. Eine umlaufende Nut ist vorteilhaft so am äußeren Rand der Schneidfläche des Bretts angeordnet, dass diese als Saftrille dient und eine Ansammlung einer Flüssigkeit auf der Schneidfläche reduziert. Eine zweite Nut kann als Schale für Besteck, wie beispielsweise ein Schneidmesser, oder aber auch für bereits geschnittene Lebensmittel oder Lebensmittelreste dienen und sorgt so für eine verbesserte Ordnung auf der Schneidfläche. Auch können mehrere Nuten aus denselben Gründen vorgeschlagen werden, um mehr Lebensmittel, Lebensmittelreste oder Schneidwerkzeuge aufnehmen und voneinander trennen zu können. Mindestens ein Magnet ist besonders dann vorteilhaft, wenn dieser ein Schneidwerkzeug an einer Stelle hält, auch bei stärkeren Bewegungen, die insbesondere bei Outdoor-Aktivitäten wie Bergsteigen oder Wanderungen vermehrt auftreten. Eine Durchgriffsöffnung im Brett ist besonders vorteilhaft, da diese eine Herausnahme des Bretts aus dem Deckel vereinfacht, um so beispielsweise die beiden Teile einzeln zu reinigen. Die Verwendung von Messern oder dergleichen zum Heraushebeln des Brettes aus dem Deckel kann mit großem Vorteil für die Bediensicherheit entfallen.

In Weiterbildung der Erfindung wird vorgeschlagen, dass Behälter und Deckel aus einem Metall, insbesondere aus Edelstahl, Titan oder Aluminium bestehen. Sind Behälter und Deckel aus einem der genannten Materialien hergestellt, sind diese lebensmitteltauglich, robust, leicht und einfach zu reinigen.

Besteht das Brett aus einem Hartholz, insbesondere Nuss, Buche, Esche oder Ahorn und ist mit natürlichem Öl, insbesondere Leinöl eingelassen, so wird vorteilhaft erreicht, dass dieses schnittfest, einfach zu reinigen und zu gebrauchen ist. Ebenfalls erfindungsgemäß ist ein Brett aus einem Holzwerkstoff, Kunststoff, insbesondere Polyethylen oder Duroplast, Glas, keramischen Werkstoff, Naturstein oder Metall.

Schließlich ist in Ausgestaltung der Erfindung noch vorgesehen, dass Behälter, Deckel und Brett spülmaschinengeeignet sind. Diese Ausgestaltung fördert ebenfalls die besonders einfache Handhabung und Reinigung der Einzelteile.

Die Erfindung wird in einer bevorzugten Ausführungsform unter Bezugnahme auf die Figuren einer Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren zeigen im Einzelnen:
- Fig. 1:: schematische Ansicht einer bevorzugten Ausführungsform eines erfindungsgemäßen Deckels mit Brett und Gurtband und
- Fig. 2:: schematische Ansicht einer bevorzugten Ausführungsform eines erfindungsgemäßen Behälters mit Trennwand.

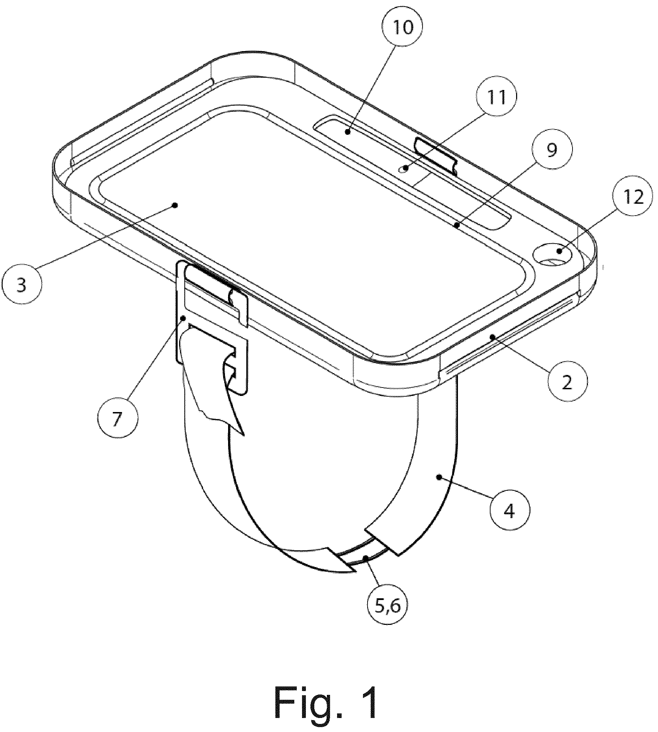

**Fig. 1** zeigt eine schematische Ansicht einer bevorzugten Ausführungsform eines erfindungsgemäßen Deckels 2 mit Brett 3 und Gurtband 4. Im Deckel 2 ist ein Brett 3 eingelassen, welches durch einen Form- oder Kraftschluss im Deckel 2 gehaltert und stabilisiert ist. Die Schneidfläche des Bretts 3 ist die von einer Innenseite des Deckels 2 abgewandte Seite, sodass das Brett 3 für dessen Einsatz als Schneidbrett nicht vorher aus dem Deckel 2 entnommen werden muss. Das Brett 3 weist auf dieser Seite eine umlaufende Nut 9 auf, welche als Saftrinne fungiert und einer Flüssigkeitsansammlung auf der Schneidfläche entgegenwirkt. Weiter weist das Brett 3 eine zweite Nut 10 auf, in die beispielsweise ein Messer einlegbar und so gegen Verrutschen gesichert ist. Das Brett 3 kann weitere Nuten aufweisen, welche beispielsweise zur Ansammlung von Abfällen oder bereits vorbereiteten Lebensmitteln dienen. In der zweiten Nut 10 ist ein Magnet 11 in das Brett eingearbeitet, der das Schneidwerkzeug an dieser Stelle hält. Alternativ zu dieser Ausführungsform können eine zweite Nut 10 ohne einen Magneten 11 oder ein Magnet 11 ohne eine zweite Nut 10 vorhanden sein. Weiter weist das Brett 3 eine Durchgangsöffnung 12 auf, welches eine Herausnahme des Bretts 3 aus dem Deckel 2 vereinfacht. An der nicht dargestellten, zum Deckel 2 weisenden Seite des Brettes 3 können erfindungsgemäß ein oder mehrere Magnete angeordnet, insbesondere in Ausnehmungen aufgenommen sein, die das Brett 3 magnetisch am Deckel 2 verankern. In der in **Fig. 1** dargestellten Ausführungsform sind, wie am oberen Rand der Figur ersichtlich, Sicken im Deckel 2 eingeformt, insbesondere in dessen Deckelrand, welche als Formschlußelemente für das Brett 3 fungieren und dieses im Deckel 2 halten.

An dem Deckel 2 ist ein Gurtband 4 lösbar befestigt, welches in seiner wirksamen Länge - seiner Spannlänge - veränderbar ist. Dies ist in der vorliegenden Ausführungsform durch einen G-förmigen Haken 7 ermöglicht, der schlingenartig vom Gurtband 4 durchsetzbar ist und durch den die wirksame Länge des Gurtbandes 4 durch ein einfaches Festziehen über den G-Haken 7 ermöglicht ist. Weiter weist das Gurtband 4 ein Verdrehgelenk 5 auf, welches in dem vorliegenden Ausführungsbeispiel durch zwei Schnüre 6, beispielsweise Reepschnüre, gebildet ist. Bei einem Verdrehen des durch die Schnüre 6 zweigeteilten Gurtbandes 4 wird ein nachteiliges, mit Druckstellen verbundenes, In-sich-Verdrehen eines Gurtbandes 4 durch ein Übereinanderlegen der Schnüre 6 ersetzt, welche weitaus geringer, wenn überhaupt von einem Benutzer am Oberschenkel spürbar sind.

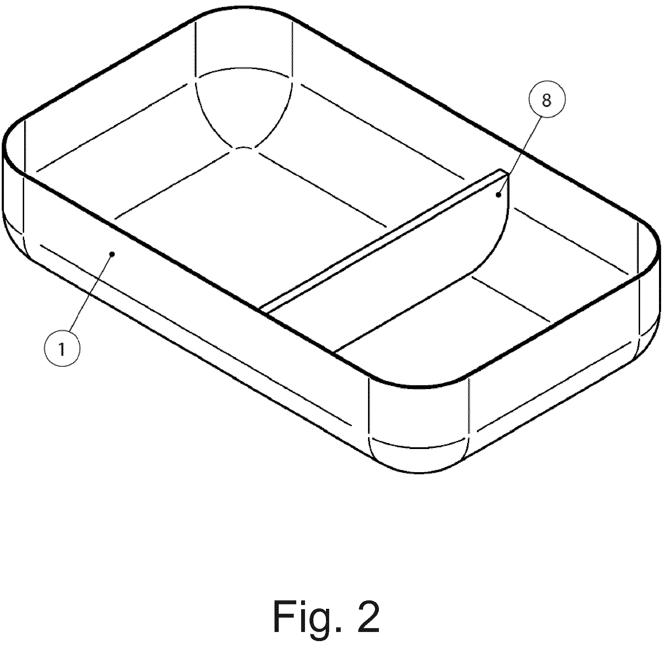

**Fig. 2** zeigt eine schematische Ansicht einer bevorzugten Ausführungsform eines erfindungsgemäßen Behälters 1 mit Trennwand 8. Der Behälter 1 hat eine abgerundete Form, um Kanten und entsprechende Druckstellen zu vermeiden, aber auch um eine erhöhte Stabilität des Behälters 1 zu gewährleisten. Alternativ dazu ist auch ein eckiger Behälter 1 erfindungsgemäß. Eine Trennwand 8 ist so in dem Behälter 1 eingelassen, dass die Trennwand 8 vor einem Verrutschen oder einem Herausfallen aus dem Behälter 1 gesichert ist. Eine Verwendung mehrerer Trennwände ist ebenfalls erfindungsgemäß. Dies ist vorzugsweise durch einen einfachen Form- oder Kraftschluss ermöglicht. Die Höhe der Trennwand 8 ist dabei so gewählt, dass das in **Fig. 1** gezeigte Brett 3 im geschlossenen Zustand der Brotzeitdose auf der Trennwand 8 aufliegt.

### BEZUGSZEICHENLISTE

- 1: Behälter
- 2: Deckel
- 3: Brett
- 4: Gurtband
- 5: Verdrehgelenk
- 6: Schnur
- 7: G-Haken
- 8: Trennwand
- 9: Umlaufende Nut
- 10: Zweite Nut
- 11: Magnet
- 12: Durchgriffsöffnung

## Patentansprüche

1. Brotzeitdose aufweisend einen Behälter (1), einen korrespondierenden Deckel (2) und ein Brett (3), welches lösbar in dem Deckel (2) aufgenommen ist, wobei der Deckel (2) mindestens ein Gurtband (4) aufweist, wobei der Deckel (2) durch das mindestens eine Gurtband (4) auf den Behälter (1) spannbar ist, wobei das mindestens eine Gurtband (4) zumindest an einem Ende lösbar mit dem Deckel (2) verbunden ist, **dadurch gekennzeichnet, dass** das Gurtband (4) ein Verdrehgelenk (5) aufweist.

2. Brotzeitdose nach Anspruch 1, **dadurch gekennzeichnet, dass** das Verdrehgelenk (5) im Bereich der Mitte in Längsrichtung oder an mindestens einem Ende des Gurtbandes (4) angeordnet ist.

3. Brotzeitdose nach Anspruch 1 oder 2, **dadurch gekennzeichnet, dass** das Verdrehgelenk (5) als mindestens eine, vorzugsweise zwei oder mehr Schnüre (6), insbesondere im Bereich der Mitte in Längsrichtung des Gurtbandes (4), oder als metallisches Drehgelenk, insbesondere an mindestens einem Ende des Gurtbandes (4), ausgebildet ist.

4. Brotzeitdose nach einem der vorherigen Ansprüche, **dadurch gekennzeichnet, dass** das Gurtband (4) an mindestens einem Ende durch einen G-Haken (7) mit dem Deckel (2) verbunden ist.

5. Brotzeitdose nach einem der vorherigen Ansprüche, **dadurch gekennzeichnet, dass** Behälter (1) und Deckel (2) formschlüssig oder kraftschlüssig miteinander verbindbar sind.

6. Brotzeitdose nach einem der vorherigen Ansprüche, **dadurch gekennzeichnet, dass** der Behälter (1) mindestens eine Trennwand (8) aufweist, insbesondere eine lösbare Trennwand (8), wobei insbesondere deren Höhe so gewählt ist, dass das Brett (3) im geschlossenen Zustand der Brotzeitdose auf der Trennwand (8) aufliegend ist.

7. Brotzeitdose nach einem der vorherigen Ansprüche, **dadurch gekennzeichnet, dass** das Brett (3) mindestens eines der folgenden Elemente aufweist: eine umlaufende Nut (9) mindestens an dessen Oberseite, mindestens eine zweite Nut (10), mindestens einen Magneten (11), ein Durchgriffsöffnung (12).

8. Brotzeitdose nach einem der vorherigen Ansprüche, **dadurch gekennzeichnet, dass** Behälter (1) und Deckel (2) aus einem Metall, insbesondere Edelstahl, Titan oder Aluminium bestehen.

9. Brotzeitdose nach einem der vorherigen Ansprüche, **dadurch gekennzeichnet, dass** das Brett (3) aus einem Hartholz, insbesondere Nuss, Buche, Esche oder Ahorn besteht und mit natürlichem Öl, insbesondere Leinöl eingelassen ist.

## Claims

1. Snack box comprising a container (1), a corresponding lid (2) and a cutting board (3), which is detachably incorporated within the lid (2), wherein the lid (2) comprises at least one strap (4), wherein the lid (2) can be tightened onto the container (1) by means of the at least one strap (4), wherein the at least one strap (4) is detachably connected to the lid (2) on at least one end, **characterized in that** the strap (4) comprises a swivel joint (5).

2. Snack box according to Claim 1, **characterized in that** the swivel joint (5) is arranged in the area of the centre in the longitudinal direction or at least one end of the strap (4).

3. Snack box according to Claim 1 or 2, **characterized in that** the swivel joint (5) is designed as at least one, preferably two or more lines (6), in particular, in the area of the centre in the longitudinal direction of the strap (4) or as a metallic swivel joint, in particular, on at least one end of the strap (4).

4. Snack box according to any one of the preceding claims, **characterized in that** the strap (4) is connected to the lid (2) on at least one end by means of a G-hook (7).

5. Snack box according to any one of the preceding claims, **characterized in that** the container (1) and the lid (2) can be connected to one another in a positive-locking or a non-positive-locking manner.

6. Snack box according to any one of the preceding claims, **characterized in that** the container (1) comprises at least one partition wall (8), in particular, a detachable partition wall (8), wherein, in particular, its height is chosen in such a way that the cutting board (3) rests on the partition wall (8) in the closed state of the snack box.

7. Snack box according to any one of the preceding claims, **characterized in that** the cutting board (3) comprises at least one of the following elements: a circumferential groove (9) at least on its top side, at least one second groove (10), at least one magnet (11), a grip-through opening (12).

8. Snack box according to any one of the preceding claims, **characterized in that** the container (1) and the lid (2) are made of a metal, in particular, stainless steel, titanium or aluminium.

9. Snack box according to any one of the preceding claims, **characterized in that** the cutting board (3) consists of a hardwood, in particular, nutwood, beech, ash or maple and has been treated with natural oil, in particular, linseed oil.

## Revendications

1. Boîte à collation comportant un contenant (1), un couvercle (2) correspondant et une planchette (3), laquelle est logée de façon amovible dans le couvercle (2), sachant que le couvercle (2) comporte au moins une sangle (4), sachant que le couvercle (2) peut être serré par au moins une sangle (4) sur le contenant (1), sachant qu'au moins une sangle (4) est reliée sur une extrémité de façon amovible au couvercle (2), **caractérisée en ce que** la sangle (4) comporte une articulation à rotation (5).

2. Boîte à collation selon la revendication 1, **caractérisée en ce que** l'articulation à rotation (5) est disposée à proximité du centre dans le sens longitudinal ou sur au moins une extrémité de la sangle (4).

3. Boîte à collation selon la revendication 1 ou 2, **caractérisée en ce que** l'articulation à rotation (5) est constituée comme au moins un, de préférence deux ou plusieurs cordons (6), en particulier à proximité du centre dans le sens longitudinal de la sangle (4) ou comme articulation tournante métallique, en particulier sur au moins une extrémité de la sangle (4).

4. Boîte à collation selon l'une quelconque des revendications précédentes, **caractérisée en ce que** la sangle (4) est reliée au couvercle (2) à au moins une extrémité par un crochet en forme de G (7).

5. Boîte à collation selon l'une quelconque des revendications précédentes, **caractérisée en ce que** le contenant (1) et le couvercle (2) peuvent être reliés l'un à l'autre par conformité de forme ou conformité de force.

6. Boîte à collation selon l'une quelconque des revendications précédentes, **caractérisée en ce que** le contenant (1) comporte au moins une paroi de séparation (8), en particulier une paroi de séparation amovible (8), sachant en particulier que la hauteur de celle-ci est choisie de telle manière que la planchette (3) repose sur la paroi de séparation (8) à l'état fermé de la boîte à collation.

7. Boîte à collation selon l'une quelconque des revendications précédentes, **caractérisée en ce que** la planchette (3) comporte au moins un des éléments suivants, une rainure périphérique (9) sur au moins la face supérieure de celle-ci, au moins une deuxième rainure (10), au moins un aimant (11), une ouverture de pénétration pour saisie (12).

8. Boîte à collation selon l'une quelconque des revendications précédentes, **caractérisée en ce que** le contenant (1) et le couvercle (2) sont composés d'un métal, en particulier d'acier spécial, de titane ou d'aluminium.

9. Boîte à collation selon l'une quelconque des revendications précédentes, **caractérisée en ce que** la planchette (3) est composée d'un bois dur, en particulier de noyer, de hêtre, de frêne ou d'érable et est emboîtée avec une huile naturelle, en particulier de l'huile de lin.
